# EUROPEAN PATENT SPECIFICATION

(11) **EP 4 488 516 B1**
(45) Date of publication and mention of the grant of the patent: **03.12.2025**
(21) Application number: 24186467.7
(22) Date of filing: 04.07.2024
(51) Int. Cl.: F03D 80/50, F03D 80/55, H02K 7/18, H02K 15/00

(54) **METHOD FOR CLEANING A GENERATOR OF A WIND TURBINE**
VERFAHREN ZUR REINIGUNG EINES GENERATORS EINER WINDENERGIEANLAGE
PROCÉDÉ DE NETTOYAGE D'UN GÉNÉRATEUR D'UNE ÉOLIENNE

(30) Priority: 05.07.2023 EP 23183670
(43) Date of publication of application: 08.01.2025
(73) Proprietor: Siemens Gamesa Renewable Energy A/S, 7330 Brande (DK)
(72) Inventor: Celiloglu, Rifat, 7100 Vejle (DK); Toft, Anders Saaby, 8700 Horsens (DK)
(74) Representative: SGRE-Association

(56) References cited:
- CN-A- 116 378 915
- JP-A- 2002 256 295
- US-A1- 2010 021 299
- RENEWABLEENERGYWORLDCONTENTTEAM: "An Innovative Approach to Cleaning Generator Windings", 6 January 2007 (2007-01-06), XP093104123, Retrieved from the Internet <URL:https://www.renewableenergyworld.com/baseload/hydropower/an-innovative-approach-to-cleaning-generator-windings/#gref> [retrieved on 20231121]
- JOHN WEBB: "Important Notice", vol. SWG Admin, 3 May 2018 (2018-05-03), pages 1 - 88, XP068230324, Retrieved from the Internet <URL:https://ieee-sa.imeetcentral.com/p/aQAAAAADkee7> [retrieved on 20230720]

## Description

### FIELD OF THE INVENTION

The present invention relates to a method for cleaning a generator of a wind turbine, to a method for operating a wind turbine, to a wind turbine, and to a use of a cleaning agent for cleaning a wind turbine.

### BACKGROUND

Generators in wind turbines are facing a grease leakage issue which is sourced by the main bearing of the generator. The leaking grease from the main bearing seals finds its way into the generator that cannot be reached by cleaning apparatuses since the space within the generator housing is very limited.

Against this background, it is a problem to be solved by the present invention to provide for a possibility to clean a generator, in particular the stator windings of a generator in a wind turbine from grease.

Documents considered during the patent prosecution are i.a.: CN 116 378 915 A, US 2010/021299 A1, JP 2002 256295 A and "An Innovative Approach to Cleaning Generator Windings"(2007-01-06), Retrieved from the Internet: https://www.renewableenergyworld.com/baseload/hydropower/an-innovative-approach-to-cleaning-generator-windings/#gref.

### SUMMARY

According to an aspect, the wind turbine having a generator to be cleaned comprises a tower, a nacelle rotatably mounted to the tower, a wind turbine rotor with at least one rotor blade, the wind turbine rotor being rotatably mounted to the nacelle around an essentially horizontal rotational axis, and an electric generator drivable by the wind turbine rotor.

According to an embodiment, the generator comprises a fixed housing and a rotating housing, a generator rotor having magnetic elements, a stator having windings, and a cooling device attached to an opening of the fixed housing. In particular, according to this embodiment the stator is encompassed or surrounded by the generator rotor, wherein the stator is equipped with a plurality of windings. The generator rotor is rotatably connected to the wind turbine rotor such that a rotation of the wind turbine rotor is transmitted on the generator rotor. In particular, the rotating housing of the generator is rotatably connected to the wind turbine rotor while supporting on a radial inner side a plurality of magnetic elements. The configuration of the generator rotor and the stator is chosen such that only a smaller airgap in radial direction is in between a winding of the stator and a magnetic element of the rotor. Furthermore, the generator comprises a cooling device which is attached to an opening of a fixed portion of the housing (fixed housing).

According to another embodiment/aspect the configuration of the generator may be different, for example such that the rotor of the generator is encompassed by the stator of the generator, while the rotor comprises at least one magnetic element, wherein the stator comprises at least one winding.

If the generator is driven by the wind turbine rotor, a relative translational/rotational movement between magnetic elements and windings of the generator is generated. By this an electric current is induced in the windings.

According to an aspect, in particular for cleaning a wind turbine having a configuration as described, the problem is solved by providing a method for cleaning the generator. The method comprising the steps of locking the wind turbine rotor and shutting off the generator. Then, the cooling device is removed such that the opening when the fixed housing is accessible for maintenance purposes. By providing this access opening the following step is enabled without having the necessity to create in additional opening in the housing of the generator and thereby inflicting structural harm to the generator. Subsequently, exceeding agent is inserted or poured into the opening such that the cleaning agent gets at least partially in effective contact with a winding and/or with a magnetic element. The cleaning agent then starts to act on the dirt, grease, or other substances being unwantedly present on the surface of a part of the generator, in particular on the sensible windings of the stator. After this, the cleaning agent is removed from the inside of the generator. Now, the cooling device is mounted again onto the opening of the housing, thereby closing the housing. The wind turbine can now resume its operation after having released the wind turbine rotor.

By conducting the method as described, for the first time a drastic technical prejudice is overcome, namely, to insert a cleaning agent into an inner volume of a generator. Usually, the skilled person would refrain from inserting a cleaning agent into an inner volume of the generators due to the presence of highly sensible surfaces, for example surfaces of the windings of the stator. By executing a vast series of elaborated tests and experiments a unique solution was identified by the inventing engineers that a specific cleaning agent having a unique composition is indeed suitable - in contrast to all understanding of the prior art. Surprisingly, it has been found out that inserting a cleaning agent into the generator is successful for removing dirt or grease from surfaces of the stator or generator rotor, wherein the cleaning agent is or comprises a grease remover, and wherein the grease remover is a non-waters-soluble and is a fluid liquid such that the generator of the wind turbine can be partially flushed with the grease remover, has a density larger than 0.6 g/cm3 and lower than 0.85 g/cm3, has kinematic viscosity larger than 1.3 mm²/s and lower than 2.5 mm²/s, and comprises N-Paraffins and hydrocarbons.

The identification of the suitability of the specific cleaning agent required a remarkable investment in research and development, since the majority of tested cleaning agents shows to be unsuitable, ineffective, or even harmful to components of the generator. exclusively, the cleaning agent having the properties as described above succeeded in fulfilling various requirements of application.

The Term "in effective contact" may be understood such that a physical contact between the cleaning agent and a surface - possibly being partially covered with dirt, grease, or other substances being unwantedly present on the surface of the segment - is realized and the cleaning, solving, and removing effect of the cleaning agent can take place.

The cleaning agent may stay in effective contact with the respective segment or may remain within the generator for a given cleaning time to take effect. The given cleaning time is defined between the moment of first application of the cleaning agent and start of the removal step. The giving cleaning time is at least three minutes, preferably at least five minutes, more preferably at least 10 minutes, even further preferred at least 15 minutes, and or is not more than 60 minutes, preferably not more than 30 minutes, more preferably not more than 20 minutes.

Furthermore, the cleaning agent may be inserted into the generator or onto a surface of the inner volume of the generator such that a kinetic energy of a spray of the cleaning agent serves for properly distributing the cleaning agent over a majority of the relevant surfaces, in particular over the windings of the stator.

Additionally or alternatively, the cleaning agent may be inserted into the generator or onto a respective surface by using a spray-device for inserting the cleaning agent configured such that a sharp and compact spray, compact of cleaning agent can be provided. The term "sharp and compact spray" may be understood such, that the spray has a spray opening-angle of not more than 90°, preferably not more than 70°, more preferably not more than 45°, even further preferred not more than 20°. In particular the sharp and compact spray is configured such, that both is achieved, namely, covering a broader surface to be cleaned and applying a certain kinetic energy into the sprayed cleaning agent.

As a next subsequent step the contaminated cleaning agent is removed from the generator. That means, at least a significant portion of the cleaning agent is taken away from a respective surface of the inner volume of the generator, is removed from the inside of the generator, and/or is sucked out of an inner volume of the generator such, that a normal standard functionality of the generator can be resumed. That means, a certain amount of residual cleaning agent not negatively inflicting with the functionality of the generator may remain in the inside of the generator such, that a test for the presence of the remaining cleaning agent is positive even after conducting the step of removing the cleaning agent from the generator. In particular, the step of removing the cleaning agent may comprise that at least 80%, preferably at least 90%, more preferably at least 95%, even more preferably at least 97%, or even stronger preferred that at least 99% of the initially provided cleaning agent is removed from the inside of the generator. A status as described, namely that the cleaning agent is at least partially removed, can be determined as "the generator being cleaned".

In a next step, the rotor is released from a temporary rotor lock for being able to rotate. The rotor is subsequently rotated such that another portion of the generator rotor can be cleaned. Cleaning of the other portion comprises locking the rotor again, inserting a cleaning agent into the generator or into the housing such that the cleaning agent is at least partially in effective contact with the other portion, and removing or at least partially removing the cleaning agent from the other portion of the generator. This process of cleaning may be continued and/or repeated until the entirety of the generator, e.g. all portions of the generator rotor are cleaned.

In the context of the present disclosure, shutting off a generator may involve disconnecting electrical connections by tripping/opening the circuit breakers between the generator and a rest of the turbine, such that the generator is free from electricity. Thus, starting the generator may involve connecting the electrical connection by closing opened circuit breakers between the generator and the wind turbine, such that the generator generates electrical energy, i.e., converts wind energy into electrical energy.

For shutting off the generator, the generator may be brought into a so-called LOTO state.

In the context of the present disclosure, idling or moving the rotor of a wind turbine means to circle the rotor without generating electrical energy for a distance, such as a length of a segment of the generator, for example. Thus, the rotor may be moved for a distance that equals 360° divided by a number of portions of the rotor.

In the context of the present disclosure, locking a rotor of a wind turbine prevents the rotor from moving. This locking may be caused by blocking a gear connected to the rotor or by engaging a brake connected to the rotor, for example.

Accordingly, the cleaning agent may be fed into the generator at a first point within the generator and removed at a second point within the generator, wherein the first point is higher in a direction of gravity than the second point. Alternatively, or additionally, the cleaning agent may be removed from the segment using a vacuum pump. Thus, by using gravity and/or vacuum, a force is applied that urges the cleaning agent through the segment, such that the cleaning agent comes in contact with grease accumulated inside generator, dissolves it, absorbs it and transports it out of the generator.

In particular the use of vacuum allows the cleaning agent to be almost completely removed from the generator, preventing the release of cleaning agent into the environment.

By moving the rotor and/or the generator, the cleaning process can be repeated for another portion of the generator rotor. To move the rotor, a brake on the rotor is released, allowing the rotor to rotate, e.g. using gravity and/or wind energy. Alternatively, the rotor may be moved using a motor or muscle power of a technician.

According to an embodiment, before removing or at least partially removing the cleaning agent from the segment of the generator, the rotor is moved in at least one direction.

It has been found that moving, in particular idling the rotor moves the generator together with the cleaning agent inside the generator. This movement causes mechanical stress between the cleaning agent and the generator, which causes rubbing off grease from the generator. In particular, this movement urges the cleaning agent to non-accessible areas of the generator and dilutes grease in order for the grease to run off to more accessible areas.

The rotor may be moved for a time between 1 second and 12 hours, for example.

It has been surprisingly found in an experimental procedure that the cleaning agent which is in a liquid state or becomes at least partially liquid during cleaning, does not cause any damage to the generator and, further, removes grease from the generator reliably.

In the context of the invention, it is to be mentioned that the single steps of the disclosed method are not necessarily required to be executed in the order as laid out; however, it is a favorable embodiment to execute those steps in the mentioned order.

According to an embodiment, the removed, contaminated cleaning agent is analyzed with respect to a criterion specifying the grade of contamination of the cleaning agent, and in case the grade of contamination is greater than a given threshold, the following steps are repeated until the grade of contamination is less or equal to the threshold: filling a fresh cleaning agent into the generator, and removing the contaminated cleaning agent from the generator.

Using a criterion specifying the grade of contamination of the cleaning agent provides for an objective measure to evaluate whether the cleaning is fully contaminated and needs to be replaced or the cleaning agent is not fully contaminated, and the generator is clean.

Analyzing the cleaning agent with respect to the criterion specifying the grade of contamination of the cleaning agent may involve an optical inspection by eye or by using a spectrometer, for example.

According to an embodiment, the criterion comprises a reference color.

By using a reference color as a criterion specifying the grade of contamination of the cleaning agent, the contaminated cleaning agent can be evaluated easy and fast also in harsh conditions, such as in the nacelle of a wind turbine. Thus, by comparing the color of a contaminated cleaning agent with a reference color, the state of the contaminated cleaning agent and, therefore, the state of the generator can easily be assessed.

According to an embodiment, shutting off the generator comprises disconnecting an electrical connection between the generator and the rest of the turbine.

By disconnecting the electrical connection between the generator and the rest of the turbine, it is ensured that no interaction between electrical energy in the generator and the cleaning agent is generated, which may damage the generator.

According to an embodiment, the method further comprises shutting off a cooling system for cooling the generator before filling fresh cleaning agent into the generator and starting the cooling system before starting the generator for drying the generator from the cleaning agent.

Since the cooling system, such as a number of fans, for example, are driven electrically, the cooling system should be shut off, in particular be brought into a LOTO state, in order to ensure that no electricity is induced from the cooling system into the cleaning agent.

By starting the cooling system before starting up the generator as such, a stream of air provided by the cooling system may be used for drying the generator from a rest of the cleaning agent inside the generator. Since the cooling system provides only a small amount of heat, the generator is not critically warmed up.

According to an embodiment, removing the contaminated cleaning agent from the generator comprises lowering a suction hose into a housing of the generator, and sucking out the contaminated cleaning agent using a pump.

By using a hose, the hose can be lowered to a point at which the grease accumulates, such as the lowest point in the generator, for example. Of course, multiple points inside the generator may be used for sucking out contaminated cleaning agent.

A pump may be used for sucking out the contaminated cleaning agent, such as a pump driven by a driller, which is easy to handle and can by driven by electrical power from a battery.

According to an embodiment, the fresh cleaning agent is filled into the generator through the opening in the fixed housing of the generator.

By using the opening from the inside of the nacelle of the wind turbine for filling the cleaning agent into the generator, dangerous operations outside of the nacelle can be avoided. The opening may be a hatch for maintenance of the generator.

According to an embodiment, the volume of cleaning agent filled in the generator is between 10 and 200 liters, in particular 15 and 100 liters, preferably
between 20 and 80 liters, most preferably between 30 and 50 liters.

It has been surprisingly found in an experimental procedure that a volume of cleaning agent filled in the generator between 30 and 50 liters, in particular 40 liters, leads to the best cleaning results.

According to an embodiment, the method further comprises measuring a voltage at the generator, wherein the filling fresh cleaning agent into the generator is carried out only in case the measured voltage is lower than a given threshold, in particular zero.

By measuring the voltage at the generator upon completion of the cleaning process and dry out application, a short circuit in the generator caused by a cleaning agent filled into the generator is prevented.

Additionally and/or alternatively, a further aspect is disclosed, and/or in particular as an embodiment of one of a precedingly described aspect and/or embodiments, namely, a method for operating a wind turbine, in particular an offshore wind turbine, further in particular a floating offshore wind turbine, and/or for feeding electrical and/or chemical energy to an electricity and/or chemical grid, the method comprising the following steps:
executing steps of an embodiment or of a combination of embodiments of a method as disclosed supra, and/or operating an embodiment of a device as disclosed supra,
generating, by the wind turbine, electrical power and/or electrical energy, and in particular generating at least partially from the electrical energy, further in particular, by transforming electrical energy into hydrogen by electrolysis, chemical energy in form of a gas or liquid, in particular in the form of hydrogen,
transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction, and supplying, at least partially, the electrical power, the electrical energy, and/or the chemical energy to an electrical and/or chemical utility grid, in particular to an onshore electrical and/or chemical utility grid and/or chemical/electrical storage.

The term "chemical energy" includes means for storing energy in a chemical substance such as in hydrogen. A chemical energy grid could for example be a gas (hydrogen) grid and/or storage device.

According to a third aspect, the present invention relates to the use of a cleaning fluid, in particular a grease remover, for cleaning a wind turbine, in particular a generator of a wind turbine.

It has surprisingly been found that a cleaning fluid, in particular a large amount of a cleaning fluid, such as a grease remover, can be used for cleaning a generator in a wind turbine.

Another aspect, not according to the present invention relates to a wind turbine for generating electrical energy, comprising a tower, a nacelle and/or bedframe rotatably mounted to the tower, a rotor with at least one rotor blade, the rotor being rotatably mounted to the nacelle and/or bedframe around an essentially horizontal axis, and an electric generator drivable by the rotor, wherein the wind turbine is cleaned by an embodiment of the method disclosed herein.

Another aspect, not according to the present invention relates to a wind turbine for generating electrical energy, comprising a tower, a nacelle and/or bedframe rotatably mounted to the tower, a rotor with at least one rotor blade, the rotor being rotatably mounted to the nacelle and/or bedframe around an essentially horizontal axis, and an electric generator drivable by the rotor, wherein the generator is filled with a cleaning agent having a grease remover, and wherein the grease remover has a density larger than 0.5 g/cm³, and/or lower than 0.9 g/cm³, and/or has kinematic viscosity larger than 1.0 mm²/s, and/or lower than 3.0 mm²/s, and/or wherein the grease remover is a non-waters-soluble and is a fluid liquid such that the generator of the wind turbine can be flushed with the grease remover, has a density larger than 0.6 g/cm³, more preferably larger than 0.7 g/cm³, furthermore preferably larger than 0.75 g/cm³, and/or lower than 0.85 g/cm3, more preferably lower than 0.82 g/cm³, furthermore preferably lower than 0.8 g/cm³, and/or wherein the density is essentially 0.77 g/cm³, has kinematic viscosity larger than 1.3 mm²/s, more preferably larger than 1.5 mm²/s, furthermore preferably larger than 1.8 mm²/s, and/or lower than 2.5 mm²/s, more preferably lower than 2.0 mm²/s, furthermore preferably lower than 1.9 mm²/s, and/or wherein the kinematic viscosity is essentially 1.88 mm²/s, and/or comprises N-Paraffins, hydrocarbons, aliphatic hydrocarbons, mechanical components, such as abrasives and chemical components, such as bipolar chains, and/or a binder.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 shows a method for cleaning a generator in a wind turbine, according to an embodiment,
Fig. 2 shows a stator of a generator for a wind turbine consisting of a plurality of segments,
Fig. 3 shows a segment of the stator according to fig. 1 in detail,
Fig. 4 shows a nacelle of a wind turbine with a generator.

### DETAILED DESCRIPTION

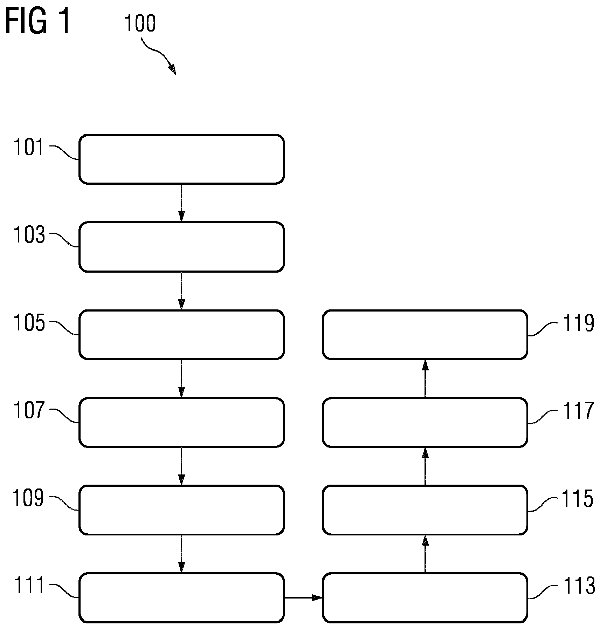

Fig. 1 shows a method 100 for cleaning a generator in a wind turbine.

The method 100 comprises a locking step 101, in which a rotor of the wind turbine is locked up, a shutting-off step 103, in which the generator is shut off, a filling step 105, in which fresh cleaning agent is filled into a segment of the generator, a removal step 107 in which the cleaning is removed or at least partially removed from the segment of the generator, a releasing step 109, in which the rotor is released and a moving step 111, in which the rotor is locked up again, a removal step 113, in which the contaminated cleaning agent is removed from the generator, a second releasing step 115, in which the rotor is released again, and a starting step 117, in which the generator is started.

The method 100 further comprises continuing by cleaning another portion of the generator rotor, wherein cleaning the other segment comprises a locking step 113, in which the rotor is locked again, an insertion step 115, in which a cleaning agent is filled into the generator, and a removal step 117, in which the cleaning is removed or at least partially removed from the generator.

Optionally, the method 100 comprises an analysis step 119, in which the removed and contaminated cleaning agent is analyzed with respect to a criterion specifying the grade of contamination of the cleaning agent, and in case the grade of contamination is greater than a given threshold, the filling step 105 and the removal step 107, are repeated until the grade of contamination is less or equal to the threshold.

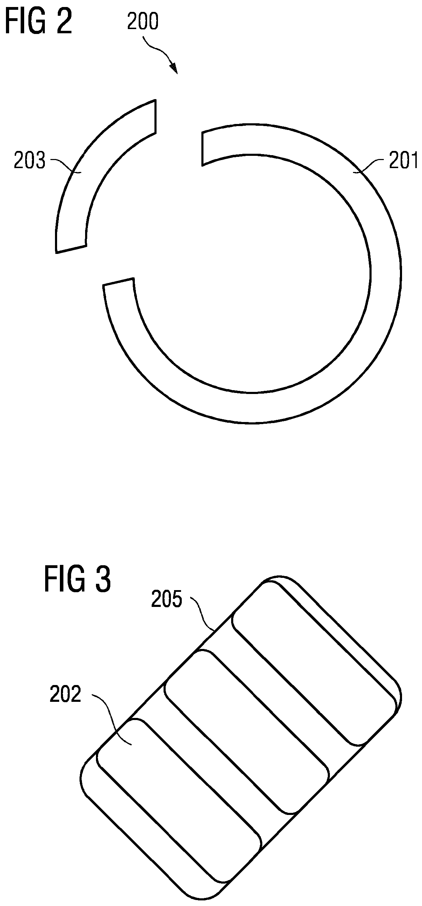

Fig. 2 shows a stator 201 of a generator for a wind turbine comprising a plurality of portions 203.

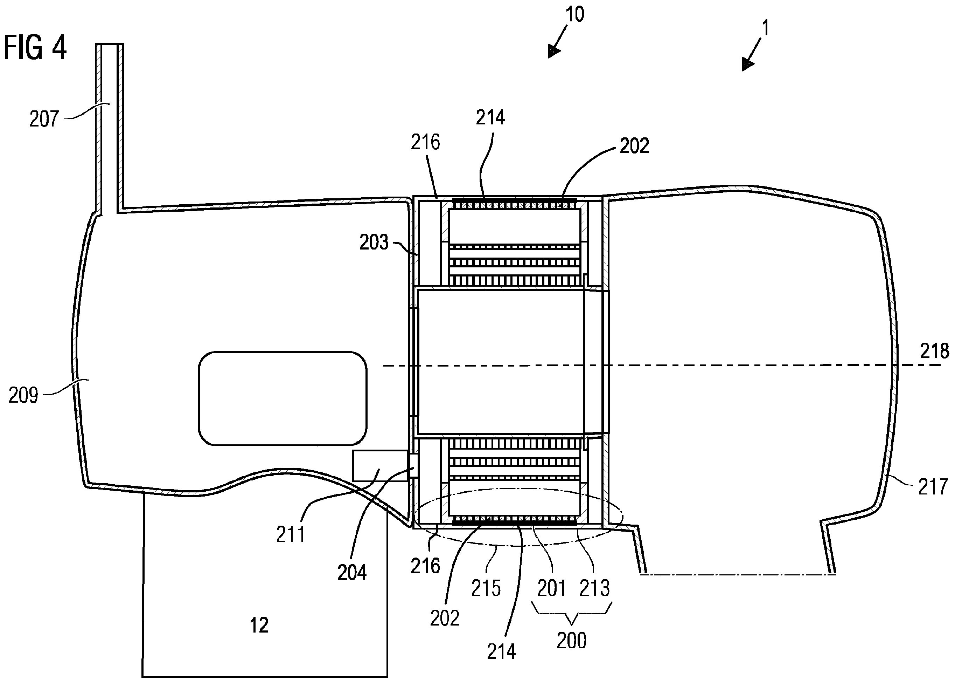

In an exemplary wind turbine (Fig. 4), a nacelle 207 is equipped with a generator 200, wherein a wind turbine rotor 217 of the wind turbine 1 is rotatable supported by the nacelle 207 such that a rotatable portion of the generator 200 can be rotated by the wind turbine rotor 217. In the exemplary case the rotatable portion of the generator 200 is referred to as the generator rotor 213 of the generator 200, wherein a non-rotating portion of the generator 200 may be referred to as the stator 201. It is apparent for the skilled person that the use of the terms "stator" and "rotor of the generator" shall not limit the scope of the present invention. Specifically, any alternative configuration of a generator having a rotatable generator-rotor and a non-rotating data is included in the scope.

According to this embodiment, the generator rotor 213 comprises a rotating portion of the housing (rotating housing 216) and magnetic elements 214. Both are connected for rotation with the wind turbine rotor 217.

According to the exemplary wind turbine, the housing of the rotor 217 of the wind turbine (or the hub of the rotor 217) encompasses also the generator 200, thereby, forming also a housing of the generator 200. Specifically, the housing of the generator 200 comprises a fixed housing 203 being primarily located on the axial side of the generator adjacent to the nacelle 207. The fixed housing 203 comprises an opening 204. A cooling device drowned 11 is mounted on the opening 204 such, that air, for example from the inside of the nacelle 207, can be blown by the cooling device in an inner volume of the generator 200.

The opening 204 is identified as being a suitable entry point for in searching the cleaning agent into the generator 200.

Since a space between the stator 201 and the taking housing of the generator 200 is very small (5 to 8 mm), the windings 202 of the stator 201 cannot be reached by a cleaning apparatus, such as a brush, for example.

In fig. 3, a segment 205 of the stator 201 is shown in detail. The segment 205 includes numerous windings 202 which are hard to access by mechanical apparatuses. Thus, the segment 205 is hard to clean.

Further, grease from bearings of the wind turbine accumulates between the windings during operation of the wind turbine, thereby causing both thermal and electrical problems. In fig. 4, the nacelle 207 of a wind turbine is shown. The nacelle 207 includes a backend 209 in which auxiliary units such as a cooling system 211 are located, a rotor 217 of the wind turbine forming a rotating housing 216 of the rotor 213 of a generator 200 including a stator 201.

A circle 215 marks a volume between the stator 201 and the housing of the generator rotor 213, which cannot be reached by cleaning apparatuses from outside the generator 200.

While specific embodiments are disclosed herein, various changes and modifications can be made without departing from the scope of the invention. The present embodiments are to be considered in all respects as illustrative and non-restrictive, and all changes coming within the meaning of the appended claims are intended to be embraced therein.
- 1: wind turbine
- 200: generator
- 201: stator
- 202: winding patent
- 203: fixed housing
- 204: opening
- 205: segment
- 207: nacelle
- 209: backend
- 211: cooling device
- 213: generator rotor
- 214: magnetic elements
- 215: circle
- 216: rotating housing
- 217: wind turbine rotor
- 218: horizontal rotational axis

## Claims

1. A method (100) for cleaning a generator (200) of a wind turbine (1),
wherein the wind turbine (1) comprises a tower (12), a nacelle (207) rotatably mounted to the tower (12), a wind turbine rotor (217) with at least one rotor blade, the wind turbine rotor (217) being rotatably mounted to the nacelle (207) around an essentially horizontal rotational axis (218), and an electric generator (200) drivable by the rotor (217),
wherein the generator (200) comprises a fixed housing (203) and a rotating housing (215), a generator rotor (213) having magnetic elements (214), a stator (201) having windings (202), and a cooling device (211) attached to an opening (204) of the fixed housing (203),
wherein the method (100) comprises:
locking (101) the wind turbine rotor (217) and shutting off (103) the generator (200);
removing the cooling device (211) such that the opening (204) is accessible for maintenance purposes;
inserting (105) a cleaning agent into the opening (204) such that the cleaning agent gets at least partially in effective contact with a winding (202) and/or with a magnetic element (214);
at least partially removing (107) the cleaning agent from the generator (200);
mounting the cooling device (211) to the opening (204); and
releasing (109) the wind turbine rotor (217),
wherein the cleaning agent is or comprises a grease remover, and wherein the grease remover is a non-waters-soluble and is a fluid liquid such that the generator (200) of the wind turbine (1) can be partially flushed with the grease remover, has a density larger than 0.6 g/cm³ and lower than 0.85 g/cm³, has a kinematic viscosity larger than 1.3 mm²/s and lower than 2.5 mm²/s, and comprises N-Paraffins and hydrocarbons.

2. The method according to claim 1,
wherein the grease remover has a density
larger than 0.7 g/cm3, furthermore preferably larger than 0.75 g/cm³, and lower than 0.82 g/cm3, furthermore preferably lower than 0.8 g/cm³, or
of essentially 0.77 g/cm³,
and wherein the grease remover has a kinematic viscosity
larger than 1.5 mm²/s, furthermore preferably larger than 1.8 mm²/s, and lower than 2.5 mm²/s, more preferably lower than 2.0 mm²/s, furthermore preferably lower than 1.9 mm²/s, or
of essentially 1.88 mm²/s.

3. The method (100) according to any of the preceding claims,
wherein the removed cleaning agent is analyzed (119) with respect to a criterion specifying the grade of contamination of the cleaning agent, and
in case a grade of contamination is greater than a given threshold, the following steps are repeated until the grade of contamination is less or equal to the threshold:
inserting (105) a cleaning agent into the opening (204) such that the cleaning agent gets at least partially in effective contact with a winding (202) and/or with a magnetic element (214);
at least partially removing (107) the cleaning agent from the generator (200).

4. The method (100) according to claim 3, wherein the criterion comprises a reference color.

5. The method (100) according to any of the preceding claims, wherein the method (100) further comprises:
shutting off the cooling device (211) for cooling the generator (200) before filling fresh cleaning agent into the generator (200), and
starting the cooling device (211) before starting the generator (200) for drying the generator (200) from the cleaning agent.

6. The method (100) according to any of the preceding claims, wherein removing (117) the contaminated cleaning agent from the generator (200) comprises
lowering a suction hose into the generator (200), and
sucking out the contaminated cleaning agent using a pump.

7. The method (100) according to any of the preceding claims, wherein the volume of cleaning agent filled in the generator (200) is between 10 and 50 liters, in particular between 10 and 30 liters.

8. The method (100) according to any of the preceding claims, comprising
measuring a voltage at the generator (200), and
wherein the filling fresh cleaning agent into the generator (200) is carried out only in case the measured voltage is lower than a given threshold and/or is essentially zero volt.

9. A method for operating a wind turbine, in particular an offshore wind turbine, further in particular a floating offshore wind turbine, and/or for feeding electrical energy to an electricity grid, the method comprising the following steps:
cleaning a generator (200) of the wind turbine (1) according to one of the preceding claims;
generating, by the wind turbine (1), electrical power and/or electrical energy;
transmitting, at least partially, the electrical power and/or the electrical energy to an energy receiving arrangement, in particular wherein the receiving arrangement is not positioned in international waters, is positioned onshore, and/or is positioned within a 12-miles-zone of a respective sovereign national state over which the respective state has jurisdiction, and
supplying, at least partially, the electrical power and/or the electrical energy to an onshore electrical utility grid.

## Patentansprüche

1. Verfahren (100) zum Reinigen eines Generators (200) einer Windenergieanlage (1),
wobei die Windenergieanlage (1) einen Turm (12), eine rotierbar an dem Turm (12) montierte Gondel (207), einen Windenergieanlagenrotor (217) mit mindestens einem Rotorblatt, wobei der Windenergieanlagenrotor (217) um eine im Wesentlichen horizontale Rotationsachse (218) rotierbar an der Gondel (207) montiert ist, und einen durch den Rotor (217) antreibbaren elektrischen Generator (200) umfasst,
wobei der Generator (200) ein festes Gehäuse (203) und ein rotierendes Gehäuse (215), einen Generatorrotor (213) mit magnetischen Elementen (214), einen Stator (201) mit Wicklungen (202) und eine an einer Öffnung (204) des festen Gehäuses (203) angebrachte Kühlvorrichtung (211) umfasst,
wobei das Verfahren (100) Folgendes umfasst:
Verriegeln (101) des Windenergieanlagenrotors (217) und Abschalten (103) des Generators (200);
Entfernen der Kühlvorrichtung (211), so dass die Öffnung (204) zu Wartungszwecken zugänglich ist;
Einbringen (105) eines Reinigungsmittels in die Öffnung (204), so dass das Reinigungsmittel zumindest teilweise in Wirkkontakt mit einer Wicklung (202) und/oder mit einem magnetischen Element (214) kommt;
zumindest teilweises Entfernen (107) des Reinigungsmittels aus dem Generator (200);
Montieren der Kühlvorrichtung (211) an der Öffnung (204); und Freigeben (109) des Windenergieanlagenrotors (217),
wobei das Reinigungsmittel ein Fettlöser ist oder einen solchen umfasst, und wobei der Fettlöser nicht wasserlöslich ist und eine fluide Flüssigkeit ist, so dass der Generator (200) der Windenergieanlage (1) teilweise mit dem Fettlöser gespült werden kann, eine Dichte größer als 0,6 g/cm³ und kleiner als 0,85 g/cm³ aufweist, eine kinematische Viskosität größer als 1,3 mm²/s und kleiner als 2,5 mm²/s aufweist und N-Paraffine und Kohlenwasserstoffe umfasst.

2. Verfahren nach Anspruch 1,
wobei der Fettlöser eine Dichte aufweist,
die größer als 0,7 g/cm3, weiter bevorzugt größer als 0,75 g/cm³, und kleiner als 0,82 g/cm3, weiter bevorzugt kleiner als 0,8 g/cm³, ist, oder
im Wesentlichen 0,77 g/cm³ beträgt,
und wobei der Fettlöser eine kinematische Viskosität aufweist, die größer als 1,5 mm²/s, weiter bevorzugt größer als 1,8 mm²/s, und kleiner als 2,5 mm²/s, weiter bevorzugt kleiner als 2,0 mm²/s, weiter bevorzugt kleiner als 1,9 mm²/s, ist, oder
im Wesentlichen 1,88 mm²/s beträgt.

3. Verfahren (100) nach einem der vorhergehenden Ansprüche, wobei das entfernte Reinigungsmittel in Bezug auf ein Kriterium analysiert (119) wird, das den Grad einer Verunreinigung des Reinigungsmittels spezifiziert, und
wobei, falls ein Grad einer Verunreinigung größer als ein vorgegebener Schwellenwert ist, die folgenden Schritte wiederholt werden, bis der Grad einer Verunreinigung kleiner oder gleich dem Schwellenwert ist:
Einbringen (105) eines Reinigungsmittels in die Öffnung (204), so dass das Reinigungsmittel zumindest teilweise in Wirkkontakt mit einer Wicklung (202) und/oder mit einem magnetischen Element (214) kommt;
zumindest teilweises Entfernen (107) des Reinigungsmittels aus dem Generator (200).

4. Verfahren (100) nach Anspruch 3, wobei das Kriterium eine Referenzfarbe umfasst.

5. Verfahren (100) nach einem der vorhergehenden Ansprüche, wobei das Verfahren (100) ferner Folgendes umfasst:
Abschalten der Kühlvorrichtung (211) zum Kühlen des Generators (200) vor Einfüllen von frischem Reinigungsmittel in den Generator (200), und
Starten der Kühlvorrichtung (211) vor Starten des Generators (200) zum Trocknen des Generators (200) von dem Reinigungsmittel.

6. Verfahren (100) nach einem der vorhergehenden Ansprüche, wobei Entfernen (117) des verunreinigten Reinigungsmittels aus dem Generator (200) Folgendes umfasst:
Absenken eines Absaugschlauchs in den Generator (200), und
Heraussaugen des verunreinigten Reinigungsmittels unter Verwendung einer Pumpe.

7. Verfahren (100) nach einem der vorhergehenden Ansprüche, wobei das Volumen an in den Generator (200) gefülltem Reinigungsmittel zwischen 10 und 50 Liter, insbesondere zwischen 10 und 30 Liter, beträgt.

8. Verfahren (100) nach einem der vorhergehenden Ansprüche, umfassend
Messen einer Spannung an dem Generator (200), und
wobei das Einfüllen von frischem Reinigungsmittel in den Generator (200) nur durchgeführt wird, falls die gemessene Spannung kleiner als ein vorgegebener Schwellenwert ist und/oder im Wesentlichen null Volt beträgt.

9. Verfahren zum Betreiben einer Windenergieanlage, insbesondere einer Offshore-Windenergieanlage, ferner insbesondere einer schwimmenden Offshore-Windenergieanlage, und/oder zum Einspeisen von elektrischer Energie in ein Stromnetz, wobei das Verfahren die folgenden Schritte umfasst:
Reinigen eines Generators (200) der Windenergieanlage (1) nach einem der vorhergehenden Ansprüche;
Erzeugen, durch die Windenergieanlage (1), von elektrischer Leistung und/oder elektrischer Energie;
zumindest teilweises Übertragen der elektrischen Leistung und/oder der elektrischen Energie an eine Energieempfangsanordnung, insbesondere wobei die Empfangsanordnung nicht in internationalen Gewässern positioniert ist, an Land positioniert ist und/oder innerhalb einer 12-Meilen-Zone eines jeweiligen souveränen Nationalstaats positioniert ist, über die der jeweilige Staat die Gerichtsbarkeit hat, und
zumindest teilweises Zuführen der elektrischen Leistung und/oder der elektrischen Energie zu einem elektrischen Versorgungsnetz an Land.

## Revendications

1. Procédé (100) de nettoyage d'un générateur (200) d'une éolienne (1),
dans lequel l'éolienne (1) comprend une tour (12), une nacelle (207) montée de manière à pouvoir tourner à la tour (12), un rotor d'éolienne (217) avec au moins une pale de rotor, le rotor d'éolienne (217) étant monté de manière à pouvoir tourner à la nacelle (207) autour d'un axe de rotation (218) sensiblement horizontal, et un générateur électrique (200) pouvant être entraîné par le rotor (217),
dans lequel le générateur (200) comprend un logement fixe (203) et un logement rotatif (215), un rotor de générateur (213) ayant des éléments magnétiques (214), un stator (201) ayant des enroulements (202), et un dispositif de refroidissement (211) fixé à une ouverture (204) du logement fixe (203),
dans lequel le procédé (100) comprend les étapes consistant à :
verrouiller (101) le rotor d'éolienne (217) et mettre en arrêt (103) le générateur (200) ;
retirer le dispositif de refroidissement (211) de sorte que l'ouverture (204) est accessible à des fins de maintenance ;
insérer (105) un agent de nettoyage dans l'ouverture (204) de sorte que l'agent de nettoyage entre au moins partiellement en contact effectif avec un enroulement (202) et/ou avec un élément magnétique (214) ;
retirer (107) au moins partiellement l'agent de nettoyage du générateur (200) ;
monter le dispositif de refroidissement (211) au niveau de l'ouverture (204) ; et
libérer (109) le rotor d'éolienne (217),
dans lequel l'agent de nettoyage est, ou comprend, un dégraisseur, et dans lequel le dégraisseur n'est pas soluble dans l'eau et est un liquide fluide de sorte que le générateur (200) de l'éolienne (1) peut être partiellement rincé avec le dégraisseur, présente une densité supérieure à 0,6 g/cm³ et inférieure à 0,85 g/cm³, présente une viscosité cinématique supérieure à 1,3 mm²/s et inférieure à 2,5 mm²/s, et comprend des N-paraffines et des hydrocarbures.

2. Procédé selon la revendication 1,
dans lequel le dégraisseur présente une densité
supérieure à 0,7 g/cm³, préférablement en outre supérieure à 0,75 g/cm³, et inférieure à 0,82 g/cm³, préférablement en outre inférieure à 0,8 g/cm³, ou
d'essentiellement 0,77 g/cm³,
et dans lequel le dégraisseur présente une viscosité cinématique
supérieure à 1,5 mm²/s, préférablement en outre supérieure à 1,8 mm²/s, et inférieure à 2,5 mm²/s, plus préférablement inférieure à 2,0 mm²/s, préférablement en outre inférieure à 1,9 mm²/s, ou
d'essentiellement 1,88 mm²/s.

3. Procédé (100) selon l'une quelconque des revendications précédentes,
dans lequel l'agent de nettoyage éliminé est analysé (119) concernant un critère spécifiant le niveau de contamination de l'agent de nettoyage, et
au cas où un niveau de contamination est supérieur à un seuil donné, les étapes suivantes sont répétées jusqu'à ce que le niveau de contamination soit inférieur ou égal au seuil :
insérer (105) un agent de nettoyage dans l'ouverture (204) de sorte que l'agent de nettoyage entre au moins partiellement en contact effectif avec un enroulement (202) et/ou avec un élément magnétique (214) ;
retirer (107) au moins partiellement l'agent de nettoyage du générateur (200).

4. Procédé (100) selon la revendication 3, dans lequel le critère comprend une couleur de référence.

5. Procédé (100) selon l'une quelconque des revendications précédentes, dans lequel le procédé (100) comprend en outre :
la mise à l'arrêt du dispositif de refroidissement (211) pour refroidir le générateur (200) avant de remplir de l'agent de nettoyage frais dans le générateur (200), et
le démarrage du dispositif de refroidissement (211) avant de démarrer le générateur (200) pour sécher le générateur (200) de l'agent de nettoyage.

6. Procédé (100) selon l'une quelconque des revendications précédentes, dans lequel l'élimination (117) de l'agent de nettoyage contaminé du générateur (200) comprend
la réduction d'un tuyau d'aspiration dans le générateur (200), et
l'aspiration de l'agent de nettoyage contaminé en utilisant une pompe.

7. Procédé (100) selon l'une quelconque des revendications précédentes, dans lequel le volume de l'agent de nettoyage rempli dans le générateur (200) est compris entre 10 et 50 litres, en particulier entre 10 et 30 litres.

8. Procédé (100) selon l'une quelconque des revendications précédentes, comprenant les étapes consistant à
mesurer une tension au niveau du générateur (200), et dans lequel le remplissage de l'agent de nettoyage frais dans le générateur (200) est exécuté uniquement dans un cas où la tension mesurée est inférieure à un seuil donné et/ou est sensiblement de zéro volt.

9. Procédé de fonctionnement d'une éolienne, en particulier d'une éolienne offshore, en outre en particulier d'une éolienne offshore flottante, et/ou d'alimentation d'énergie électrique à un réseau électrique, le procédé comprenant les étapes suivantes consistant à :
nettoyer un générateur (200) de l'éolienne (1) selon l'une des revendications précédentes ;
générer, par l'éolienne (1), une puissance électrique et/ou de l'énergie électrique ;
transmettre, au moins partiellement, la puissance électrique et/ou l'énergie électrique à un agencement de réception d'énergie, en particulier dans lequel l'agencement de réception n'est pas positionné dans des eaux internationales, est positionné sur la côte, et/ou est positionné à l'intérieur d'une zone de 12 miles d'un état national souverain respectif sur laquelle l'état respectif possède une juridiction, et à alimenter, au moins partiellement, la puissance électrique et/ou l'énergie électrique à un réseau électrique onshore.
